# EUROPEAN PATENT APPLICATION

(11) **EP 4 806 833 A1**
(43) Date of publication of application: **16.09.2026**
(21) Application number: 24881843.7
(22) Date of filing: 04.07.2024
(51) Int. Cl.: B66F 9/075, G01S 17/88, G01S 7/48

(54) **ITEM POSE DETECTION METHOD AND APPARATUS, HANDLING DEVICE, AND STORAGE MEDIUM**

(30) Priority: 27.10.2023 CN 202311411761
(71) Applicant: Effito Pte. Ltd., Singapore 048545 (SG)
(72) Inventor: YANG, Bingchuan, Singapore 048545 (SG); FANG, Mu, Singapore 048545 (SG); LU, Yujie, Singapore 048545 (SG)
(74) Representative: Bandpay & Greuter
(86) International application number: PCT/IB2024/056538
(87) International publication number: WO 2025/088386

(57) **Abstract**

The present application provides a cargo pose detection method and apparatus, a material handling equipment and a storage medium, where the method includes: acquiring laser point cloud data; performing point cloud separation on the laser point cloud data to obtain respective light reflecting point cloud data of at least two reflectors; performing cargo pose detection based on the respective light reflecting point cloud data of the reflectors to obtain a relative pose of a cargo relative to the material handling equipment.

## Description

### CROSS-REFERENCE TO RELATED APPLICATIONS

This application claims priority to Chinese patent application No. 202311411761.1, filed with the Chinese Patent Office on October 27, 2023, which is incorporated herein by reference in its entirety.

### TECHNICAL FIELD

The present application relates to the field of intelligent warehousing technology, and in particular, to a cargo pose detection method and apparatus, material handling equipment and a storage medium.

### BACKGROUND

With the development of intelligent industry and intelligent logistics, warehouse management increasingly tends to be unmanned, and cargo pose detection plays a very important role in the warehouse management. How material handling equipment carries disordered cargos is an important problem in intelligent warehousing industry, and the most important is how to accurately detect a pose of a cargo.

### SUMMARY

The embodiments of the present application disclose a cargo pose detection method and apparatus, a material handling equipment and a storage medium, which can accurately detect a pose of an irregular cargo.

In a first aspect, the present application provides a cargo pose detection method for determining a pose of a cargo stacked on a carrier relative to a material handling equipment. The method includes: acquiring laser point cloud data, where the laser point cloud data is acquired by using a laser detection device to scan the carrier, at least two reflectors are assembled on the carrier, the at least two reflectors are disposed on two opposite sides of the carrier, and both of the at least two reflectors are configured to reflect laser emitted on the cargo from the laser detection device; performing point cloud separation on the laser point cloud data to obtain respective light reflecting point cloud data of the at least two reflectors; performing cargo pose detection based on the respective light reflecting point cloud data of the at least two reflectors to obtain a relative pose of the cargo relative to the material handling equipment.

In the above cargo pose detection solution, the laser point cloud data is acquired, then the point cloud separation is performed on the laser point cloud data to obtain the respective light reflecting point cloud data of the at least two reflectors, and finally, the cargo pose detection is performed based on the respective light reflecting point cloud data of the at least two reflectors to obtain the relative pose of the cargo relative to the material handling equipment. The cargo herein may refer to a regular cargo or an irregular cargo, which is not limited in the present application. In the present application, the at least two reflectors are disposed on the two opposite sides of the carrier, and then, after respective point cloud data of the at least two reflectors are acquired, a second relative pose of the cargo relative to the laser detection device can be determined from a position relationship between point cloud data of any two reflectors on the two opposite sides of the carrier, and coordinate transformation can be performed on the second relative pose of the cargo relative to the laser detection device to determine the relative pose of the cargo relative to the material handling equipment, such that, no matter whether the cargo is a regular cargo or not, the relative pose of the cargo relative to the material handling equipment can be calculated from respective point cloud data of the at least two reflectors on the carrier, and further a pose of an irregular cargo can be detected.

In some embodiments, the at least two reflectors have different reflectivities, and performing the point cloud separation on the laser point cloud data to obtain the respective light reflecting point cloud data of the at least two reflectors includes: performing preprocessing on the laser point cloud data to obtain preprocessed point cloud data, where the preprocessing includes at least one of followings: point cloud filtering, exception removal, data cleaning, or data transformation; performing the point cloud separation on the preprocessed point cloud data based on a light reflecting intensity difference between the at least two reflectors to obtain the respective light reflecting point cloud data of the at least two reflectors.

In some embodiments, performing the point cloud separation on the preprocessed point cloud data based on the light reflecting intensity difference between the at least two reflectors to obtain the respective light reflecting point cloud data of the at least two reflectors includes: performing point cloud clustering of different reflectors on the preprocessed point cloud data by using a preset density clustering algorithm to obtain the respective light reflecting point cloud data of the at least two reflectors.

In some embodiments, the at least two reflectors include at least one first reflector on a first side of the carrier and at least one second reflector on a second side of the carrier opposite to the first side, and performing the cargo pose detection based on the respective light reflecting point cloud data of the at least two reflectors to obtain the relative pose of the cargo relative to the material handling equipment includes: for each pair of reflectors in a plurality of pairs of reflectors composed of any one of the at least one first reflector and any one of the at least one second reflector, performing the cargo pose detection based on respective light reflecting point cloud data of a first reflector and a second reflector in the pair of reflectors to obtain a first relative pose of the cargo relative to the material handling equipment corresponding to the pair of reflectors; determining the relative pose of the cargo relative to the material handling equipment based on the first relative pose corresponding to each pair of reflectors in the plurality of pairs of reflectors.

In some embodiments, determining the relative pose of the cargo relative to the material handling equipment based on the first relative pose corresponding to each pair of reflectors in the plurality of pairs of reflectors includes: performing calculation processing on first relative poses corresponding to the plurality of pairs of reflectors to determine a result of the calculation processing as the relative pose of the cargo relative to the material handling equipment, where the calculation processing includes: averaging or taking a mode.

In some embodiments, performing the cargo pose detection based on the respective light reflecting point cloud data of the first reflector and the second reflector in the pair of reflectors to obtain the first relative pose of the cargo relative to the material handling equipment corresponding to the pair of reflectors includes: performing template matching on the respective light reflecting point cloud data of the first reflector and the second reflector; after the template matching succeeds, performing pose calculation based on the respective light reflecting point cloud data of the first reflector and the second reflector to obtain a second relative pose of the cargo relative to the laser detection device; performing coordinate transformation on the second relative pose of the cargo relative to the laser detection device to obtain the first relative pose of the cargo relative to the material handling equipment.

In some embodiments, performing the pose calculation based on the respective light reflecting point cloud data of the first reflector and the second reflector to obtain the second relative pose of the cargo relative to the laser detection device includes: performing gravity center calculation based on the respective light reflecting point cloud data of the first reflector and the second reflector to obtain a first gravity center of first light reflecting point cloud data corresponding to the first reflector and a second gravity center of second light reflecting point cloud data corresponding to the second reflector; performing center point calculation and slope calculation based on the first gravity center and the second gravity center to obtain the second relative pose of the cargo relative to the laser detection device, where the second relative pose of the cargo relative to the laser detection device includes a placement position of the cargo relative to the laser detection device and a placement direction of the cargo relative to the laser detection device, where a center point of a connecting line between the first gravity center and the second gravity center is used as the placement position of the cargo relative to the laser detection device, and the placement direction of the cargo relative to the laser detection device is determined according to a target slope of a target straight line composed of the first gravity center and the second gravity center relative to a preset reference line.

In some embodiments, performing the center point calculation and slope calculation based on the first gravity center and the second gravity center to obtain the second relative pose of the cargo relative to the laser detection device includes: acquiring a preset standard slope, where the preset standard slope is a slope of a straight line composed of a center point of the first reflector and a center point of the second reflector relative to the reference line when the carrier is in a preset standard placement position; calculating a slope difference value between the target slope and the standard slope; determining a target angle corresponding to the slope difference value as the placement direction.

In some embodiments, determining the placement direction of the cargo relative to the laser detection device according to the target slope of the target straight line composed of the first gravity center and the second gravity center relative to the preset reference line includes: when the first reflector and the second reflector are disposed exactly opposite to each other on the carrier, the standard slope is zero, and determining the placement direction according to the target slope; when the first reflector and the second reflector are disposed non-exactly opposite to each other on the carrier, the standard slope is not zero, and determining the placement direction according to the target angle corresponding to the slope difference value between the target slope and the standard slope.

In some embodiments, performing the coordinate transformation on the second relative pose of the cargo relative to the laser detection device to obtain the first relative pose of the cargo relative to the material handling equipment includes: rotating and translating the second relative pose of the cargo relative to the laser detection device based on a pre-calibrated extrinsic matrix to realize the coordinate transformation on the second relative pose, so as to obtain the first relative pose of the cargo relative to the material handling equipment, where the extrinsic matrix is configured to reflect transformation from a world coordinate system where the laser detection device is located to a target coordinate system where the material handling equipment is located.

In some embodiments, performing the template matching on the respective light reflecting point cloud data of the first reflector and the second reflector includes: calculating a first similarity between template point cloud data and the light reflecting point cloud data of the first reflector and a second similarity between the template point cloud data and the light reflecting point cloud data of the second reflector; if both the first similarity and the second similarity are greater than a preset threshold, indicating that the template matching succeeds; if at least one of the first similarity or the second similarity is less than or equal to the preset threshold, indicating that the template matching does not succeed.

In a second aspect, the present application provides a cargo pose detection apparatus for determining a pose of a cargo stacked on a carrier relative to a material handling equipment. The apparatus includes: an acquisition module, configured to acquire laser point cloud data, where the laser point cloud data is acquired by using a laser detection device to scan the carrier, at least two reflectors are assembled on the carrier, the at least two reflectors are disposed on two opposite sides of the carrier, and both of the at least two reflectors are configured to reflect laser emitted on the cargo from the laser detection device; a separation module, configured to perform point cloud separation on the laser point cloud data to obtain respective light reflecting point cloud data of the at least two reflectors; a detection module, configured to perform cargo pose detection based on the respective light reflecting point cloud data of the at least two reflectors to obtain a relative pose of the cargo relative to the material handling equipment.

In a third aspect, the present application provides a material handling equipment, including: a memory; and a processor coupled to the memory, where the processor is configured to execute the cargo pose detection method based on instructions stored in the memory.

In a fourth aspect, the present application provides a computer readable storage medium, having computer program instructions stored thereon, where the instructions are executed by one or more processors to implement steps in the cargo pose detection method.

It should be understood that the technical solutions of the second to fourth aspects in the embodiments of the present application are consistent with the technical solution of the first aspect in the embodiments of the present application, and the beneficial effects achieved in each aspect and its corresponding feasible embodiments are similar, which will not be repeated.

### BRIEF DESCRIPTION OF DRAWINGS

In order to illustrate the technical solutions in the embodiments of the present application more clearly, the accompanying drawings required for description of the embodiments will be briefly introduced below. Obviously, the drawings in the following description are some examples of the present application. For those of ordinary skill in the art, other drawings can be obtained from these drawings without creative efforts.
FIG. 1 is a schematic diagram showing a cargo pose detection scenario according to embodiments of the present application.
FIG. 2 is a structural schematic diagram showing a material handling equipment according to embodiments of the present application.
FIG. 3 is a schematic flowchart showing a cargo pose detection method according to embodiments of the present application.
FIG. 4 is a schematic flowchart showing another cargo pose detection method according to embodiments of the present application.
FIG. 5 is a schematic flowchart showing another cargo pose detection method according to embodiments of the present application.
FIG. 6 is a schematic diagram showing a standard placement direction of a carrier according to embodiments of the present application.
FIG. 7A is a schematic diagram showing two reflectors that are disposed exactly opposite to each other according to embodiments of the present application.
FIG. 7B is a schematic diagram showing two reflectors that are disposed non-exactly opposite to each other according to embodiments of the present application.
FIG. 8 is a structural schematic diagram showing another cargo pose detection apparatus according to embodiments of the present application.
FIG. 9 is a structural schematic diagram showing computer device according to embodiments of the present application.

### DETAILED DESCRIPTION

The technical solutions in the embodiments of the present application will be clearly and completely described below with reference to the accompanying drawings therein. Apparently, the described embodiments are only some but not all of the embodiments of the present application. Based on the embodiments of the present application, all other embodiments obtained by those of ordinary skill in the art without creative efforts shall fall within the protection scope of the present application.

It should be noted that terms "including," "having" and any variation thereof in the embodiments and drawings of the present application are intended to cover non-exclusive inclusion. For example, processes, methods, systems, products or devices including a series of steps or units are not limited to those listed steps or units, but optionally, further include steps or units that are not listed, or optionally, further include other steps or units inherent to these processes, methods, products or devices.

"Some embodiments" involved in the following description describe a subset of all possible embodiments, but it can be understood that "some embodiments" may be the same subset or different subsets of all possible embodiments, and may be combined with each other without conflict.

At present, a cargo is directly irradiated usually by using 3D laser, and feature data of the cargo is acquired through a camera, then a pose of the cargo is determined according to the feature data. This solution requires that the cargo is a regular cargo with conventional specification, for example, a cube or a cuboid. Because each contact surface of the regular cargo is flat, when the regular cargo is irradiated, the camera may acquire collection data including one or more complete contact surfaces of the regular cargo. Then, after one or more contact surfaces are identified and separated from the collection data, a placement position of the cargo relative to the camera may be determined from distribution positions of the acquired contact surfaces in the collection data, and a placement direction of the cargo relative to the camera may be determined from orientations of the acquired contact surfaces in the collection data. In this regard, the placement position and the placement direction may be used as a relative pose of the cargo relative to the camera.

However, for an irregular cargo, because the irregular cargo has a situation where its contact surfaces are non-flat, for example, there is a recess, a protrusion, or the like on the contact surfaces, when the 3D laser irradiates this part of contact surfaces, the camera cannot acquire collection data of the complete contact surfaces, and further the collection data corresponding to the contact surfaces cannot be completely separated, which results in that a relative pose of the irregular cargo relative to the camera cannot be calculated. In other words, it is impossible to accurately detect the pose of the irregular cargo by way of directly irradiating the cargo with the 3D laser.

First, scenario embodiments applicable to the present application will be introduced.

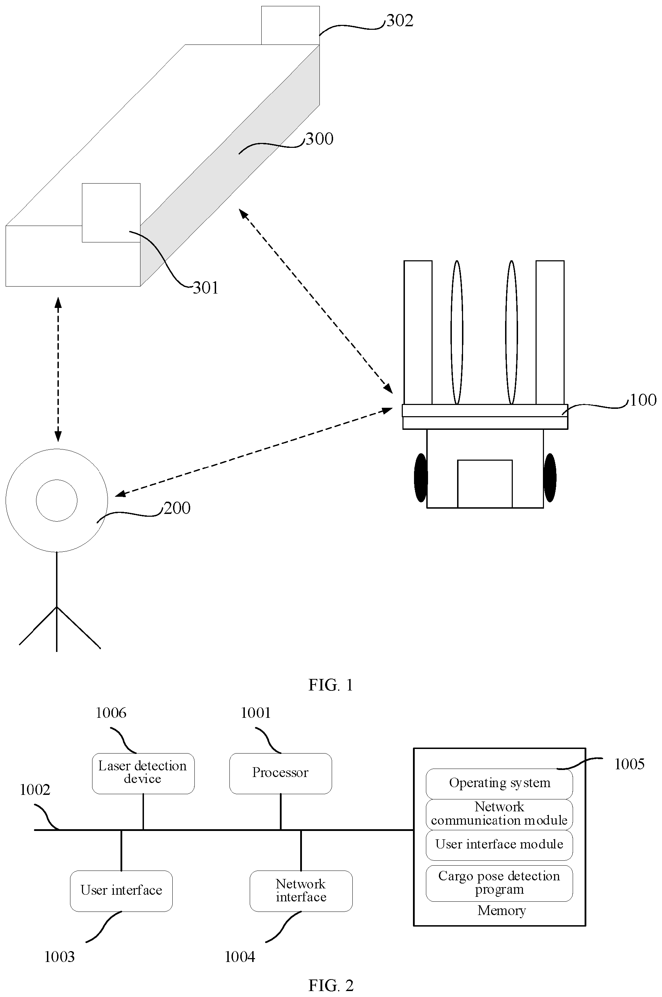

FIG. 1 is a schematic diagram showing a cargo pose detection scenario according to embodiments of the present application. The scenario shown in FIG. 1 includes: material handling equipment 100 such as an unmanned forklift, a laser detection device 200, and a carrier 300 such as a pallet. A cargo is stacked on the carrier 300 in intelligent warehousing to be further stacked into a warehouse. The carrier 300 is assembled with at least two reflectors, and the at least two reflectors are disposed on two opposite sides of the carrier. The illustration shows that at least two reflectors include a first reflector301 and a second reflector302 as an example, but does not constitute a limitation. Embodiments of assembling the reflectors are not limited. For example, the reflectors are assembled on the carrier 300 by adhering. The first reflector301 and the second reflector302 may be disposed exactly or non-exactly opposite to each other, and their disposition may be determined according to actual system requirements or user preferences in practical applications. That the two reflectors are symmetrically disposed on two sides of the carrier 300 in FIG. 1 is merely an embodiment, but does not constitute a limitation on the present application. Shapes of the first reflector301 and the second reflector302 are not limited in the present application, for example, in FIG. 1, both the first reflector301 and the second reflector302 are square, and their shapes may be determined according to actual system requirements or user preferences in practical applications, which is not limited in the present application. The material handling equipment 100 is, for example, an unmanned forklift, an Automated Guided Vehicle (AGV), or other material handling equipment capable of loading and unloading cargos from a carrier, which is not limited in the present application. The carrier 300 may be, for example, a pallet, a shelf, or other platform capable of stacking cargos.

Respective materials of the at least two reflectors are not limited in the present application, and reflectivities of the at least two reflectors are usually not same, so as to ensure that point cloud data formed by respective reflection of the at least two reflectors have differences.

Number and shapes of cargos stacked on the carrier 300 are not limited in the present application, and may be determined according to actual requirements. For example, cargos involved in the present application may refer to regular cargos with regular shapes, or to irregular cargos with irregular shapes. A size of the cargos is not limited. For example, they may be irregular cargos with different specifications/sizes.

The laser detection device 200 is configured to emit a laser signal and collect laser point cloud data reflected by a cargo or reflectors. In practical applications, the laser detection device 200 and the carrier 300 are disposed exactly opposite to each other to ensure that the laser detection device 200 can scan and collect the laser point cloud data reflected by the reflectors (for example, the first reflector301 and the second reflector302). A specific disposing position of the laser detection device 200 is not limited in the present application, for example, the laser detection device 200 may be disposed at a position of about 2 meters directly in front of the carrier 300.

It can be understood that, in the present application, corresponding laser point cloud data is collected from the reflection of the reflectors, such that light can be supplemented for the cargo, and light in a dark part of the cargo can be compensated by using a light reflecting principle of the reflectors, especially, for some dark parts of an irregular cargo, the effect is most obvious. By enabling an original cargo with a lower reflection intensity to have a better reflection intensity, the accuracy of collected laser point cloud data of the cargo can be higher.

It should be noted that the laser detection device 200 in the present application may be deployed as a part of components of the material handling equipment 100, or be deployed independently of the material handling equipment 100, which is not limited in the present application. In addition, the laser detection device 200 in the present application may be a laser detector, a laser camera, or other device for laser detection, which is not limited in the present application.

The material handling equipment 100 is configured to carry cargos stacked in the warehouse according to actual conditions. For example, after a direction of the material handling equipment 100 facing the carrier 300 or a shelf is adjusted according to a relative pose of a cargo relative to the material handling equipment 100, cargo pick-up actions may be completed through states such as lifting and lowering, thereby implementing the carrying of the cargo. The relative pose of the cargo relative to the material handling equipment 100 may be acquired by analysis based on laser point cloud data collected by the laser detection device 200, and the specific principle thereof will be described in detail below.

Next, material handling equipment embodiments applicable to the present application will be introduced.

FIG. 2 is a structural schematic diagram showing a possible material handling equipment 100 according to embodiments of the present application. As shown in this figure, the material handling equipment 100 may include a processor 1001 (for example, a Central Processing Unit (CPU)), a communication bus 1002, a user interface 1003, a network interface 1004, a memory 1005, and a laser detection device 1006. The communications bus 1002 is configured to implement connection and communication between these components. The user interface 1003 may include a display, and an input unit such as a keyboard. In some embodiments, the user interface 1003 may further include standard wired interface and wireless interface. The network interface 1004 may include standard wired interface and wireless interface (for example, a Wireless-Fidelity (Wi-Fi) interface). The memory 1005 may be a high-speed Random Access Memory (RAM), or be a stable Non-Volatile Memory (NVM), for example, a magnetic disk memory. The memory 1005 may be a storage apparatus independent of the processor 1001.

In some embodiments, the laser detection device 1006 may be disposed on the material handling equipment 100, or be independent of the material handling equipment 100. The illustration shows that the laser detection device 1006 is disposed on the material handling equipment 100 as an example, but does not constitute a limitation. The laser detection device may be a laser detector, or a device such as a laser camera, which is not limited in the present application.

In some embodiments, the memory 1005 may include an operating system, a network communication module, a user interface module, and a program corresponding to a cargo pose detection method.

In some embodiments, the network interface 1004 is mainly configured to perform data communication with a network server; and the user interface 1003 is mainly configured to perform data interaction with a user.

It should be noted that the processor 1001 and the memory 1005 in the material handling equipment of the present application may be disposed in the material handling equipment, and the material handling equipment may invoke the program corresponding to the cargo pose detection method stored in the memory 1005 through the processor 1001, and execute the cargo pose detection method provided in the embodiments of the present application. The specific installation position of the laser detection device 1006 is set by those skilled in the art according to actual requirements, which is not limited in the present application.

It can be understood that the structure of the material handling equipment shown in FIG. 2 does not constitute a limitation on the material handling equipment, and the material handling equipment may include more or fewer components than those shown in the figure, or some components may be combined, or different component arrangements may be used.

Based on the above embodiments, method embodiments involved in the present application will be introduced below.

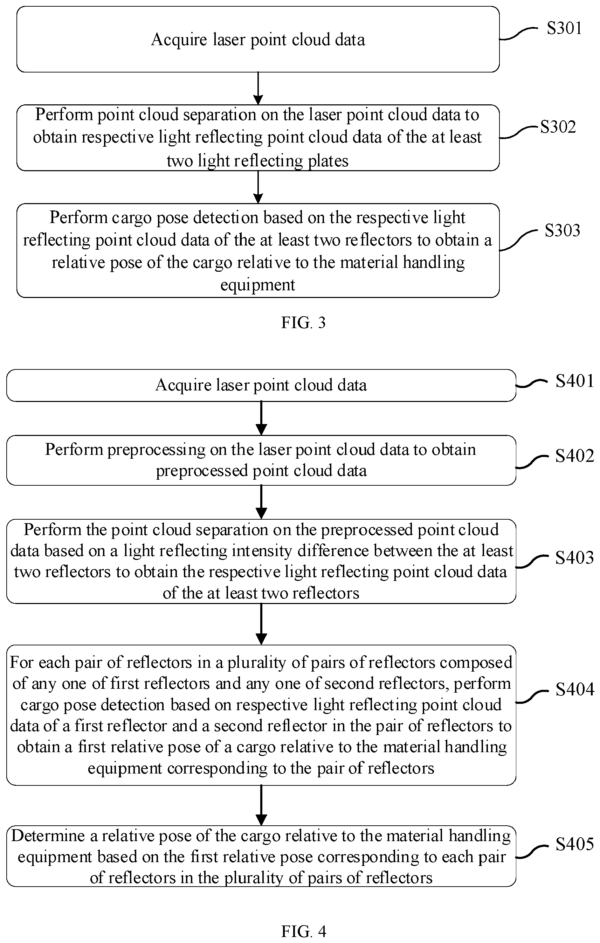

FIG. 3 is a schematic flowchart showing a cargo pose detection method according to embodiments of the present application. The method shown in FIG. 3 may be applied to material handling equipment 100 for determining a pose of a cargo stacked on a carrier relative to the material handling equipment. The method includes steps S301 to S303.

At S301, laser point cloud data is acquired, where the laser point cloud data is acquired by using a laser detection device to scan the carrier, at least two reflectors are assembled on the carrier, the at least two reflectors are disposed on two opposite sides of the carrier, and both of the at least two reflectors are configured to reflect laser emitted on the cargo from the laser detection device.

Embodiments of acquiring the laser point cloud data are not limited in the present application, for example, the laser point cloud data may be acquired by directly invoking the laser detection device 200 to collect, or the laser point cloud data may be acquired from other device (for example, a server) through a network.

The laser point cloud data in the present application refers to point cloud data acquired by using the laser detection device 200 to perform laser scanning on the carrier 300 stacked with the cargo. Specifically, laser light emitted from the laser detection device 200, after illuminating the cargo stacked on the carrier 300, may be reflected, and after the laser light reflected by the cargo is reflected by the at least two reflectors (for example, a first reflector301 and a second reflector302 in FIG. 1) assembled on the carrier 300, the laser light incident to the laser detection device 200 may form corresponding laser point cloud data, and then the laser detection device 200 may acquire the laser point cloud data.

At S302, point cloud separation is performed on the laser point cloud data to obtain respective light reflecting point cloud data of the at least two reflectors.

Specific embodiments of the point cloud separation are not limited in the present application. For example, in a possible embodiment, point cloud data separation of different reflectors may be performed directly on the laser point cloud data in the present application.

In another possible embodiment, in order to improve calculation precision, in the present application, the laser point cloud data may be first preprocessed to obtain the preprocessed point cloud data, and then point cloud data separation of different reflectors is performed on the preprocessed point cloud data to obtain the respective light reflecting point cloud data of the at least two reflectors. Specific implementation of the point cloud data separation will be described in detail below.

At S303, cargo pose detection is performed based on the respective light reflecting point cloud data of the at least two reflectors to obtain a relative pose of the cargo relative to the material handling equipment.

It should be understood that the relative pose of the cargo relative to the material handling equipment may include a placement position of the cargo relative to the material handling equipment and a placement direction of the cargo relative to the material handling equipment. The placement direction reflects a rotation direction of a coordinate system where the cargo is located relative to a coordinate system where the material handling equipment is located, and the placement direction may be determined from a position difference between respective point cloud data corresponding to any two reflectors located at opposite positions of the carrier. For example, the rotation direction may be regarded as an angle of a connecting line between a reflector1 and a reflector3 relative to a standard reference line, or an angle of a connecting line between a reflector2 and a reflector4 relative to a standard reference line. Since the at least two reflectors are assembled on the carrier, and the cargo are bound to the carrier, such that, the angle between the reference line and the connecting line which is calculated according to the position difference between the respective point cloud data corresponding to any two reflectors may be used as the placement direction of the cargo relative to the laser detection device.

Correspondingly, since the at least two reflectors are disposed on two opposite sides of the carrier, a mean coordinate of the respective point cloud data corresponding to any two reflectors located on the two opposite sides of the carrier that is obtained from calculation, for example, a mean coordinate between point cloud data of the reflector1 and point cloud data of the reflector3, may reflect a distance of a center line of the cargo relative to the material handling equipment to obtain the placement position of the cargo relative to the material handling equipment. Therefore, no matter whether the cargo is a regular cargo or not, the relative pose of the cargo relative to the material handling equipment can be calculated from the respective point cloud data of the at least two reflectors disposed on the two opposite sides.

According to the embodiments of the present application, the material handling equipment can acquire the laser point cloud data, where the laser point cloud data is acquired by using the laser detection device to scan the carrier stacked with the cargo, the at least two reflectors are assembled on the carrier, and both of the at least two reflectors are configured to reflect the laser emitted on the cargo from the laser detection device. The cargo herein may be a regular cargo with a regular shape or an irregular cargo with an irregular shape. Laser reflected by the cargo is reflected again through the at least two reflectors, and is incident to the laser detection device to form point cloud data corresponding to the at least two reflectors for the cargo; then point cloud separation is performed on the laser point cloud data to obtain the respective light reflecting point cloud data of the at least two reflectors; and the cargo pose detection is performed based on the respective light reflecting point cloud data of the at least two reflectors to obtain the relative pose of the cargo relative to the material handling equipment.

It can be seen that, in the present application, the at least two reflectors are disposed on the two opposite sides of the carrier, and then, after respective point cloud data of the at least two reflectors are acquired, the relative pose of the cargo relative to the laser detection device can be determined from a position relationship between point cloud data of any two reflectors located on the two opposite sides, such that, no matter whether the cargo is a regular cargo or not, the relative pose of the cargo relative to the material handling equipment can be calculated from point cloud data of the at least two reflectors, and further a pose of an irregular cargo can be detected.

FIG. 4 is a schematic flowchart showing another cargo pose detection method according to embodiments of the present application. The method shown in FIG. 4 may be applied to material handling equipment 100 for determining a pose of a cargo stacked on a carrier relative to the material handling equipment. The method includes steps S401 to S405.

At S401, laser point cloud data is acquired, where the laser point cloud data is acquired by using a laser detection device to scan the carrier, at least two reflectors are assembled on the carrier, the at least two reflectors are disposed on two opposite sides of the carrier, and both of the at least two reflectors are configured to reflect laser emitted on the cargo from the laser detection device.

For introduction to step S401 in the present application, reference may be made to corresponding introduction to step S301 in FIG. 3, which will not be repeated herein.

At S402, preprocessing is performed on the laser point cloud data to obtain preprocessed point cloud data, where the preprocessing includes at least one of followings: point cloud filtering, exception removal, data cleaning, or data transformation.

Specific embodiments of the preprocessing are not limited in the present application, and the preprocessing may include, but is not limited to, any one or a combination of the followings: point cloud filtering, exception removal, data cleaning, data transformation, or other data processing manner that is set by customization.

The point cloud filtering refers to filtering out point cloud data that is not reflected by the reflectors in the laser point cloud data by using a preset filtering algorithm, for example, screening/extracting point cloud data reflected by the reflectors from the laser point cloud data based on a light reflecting intensity difference between different reflectors. The filtering algorithm is set by system customization, for example, it may be statistical filtering.

The exception removal refers to removing exceptional data appearing in the laser point cloud data, for example, removing isolated point cloud data near the reflectors, or removing point cloud data that is too large or too small in the laser point cloud data.

The data cleaning refers to that, by supplementing a missing value, clearing duplicated data, and the like, discontinuous or missing point cloud data appearing in the laser point cloud data is correspondingly supplemented, or duplicated data appearing in the laser point cloud data is cleared, so as to achieve the purpose of cleaning data.

The data transformation refers to transforming the laser point cloud data by means of format conversion, smoothing and the like, so as to process the laser point cloud data into point cloud data meeting system requirements.

At S403, the point cloud separation is performed on the preprocessed point cloud data based on a light reflecting intensity difference between the at least two reflectors to obtain the respective light reflecting point cloud data of the at least two reflectors.

According to the present application, based on a light reflecting intensity difference between different reflectors, point cloud data separation of different reflectors can be performed on the preprocessed point cloud data reflector to obtain the respective light reflecting point cloud data of the at least two reflectors from the preprocessed point cloud data. Specific embodiments of the point cloud data separation are not limited in the present application. For example, in the present application, point cloud data clustering of different reflectors is performed on the preprocessed point cloud data by using a preset density clustering algorithm to separate the respective light reflecting point cloud data of the at least two reflectors from the preprocessed point cloud data. The density clustering algorithm herein may be a clustering algorithm set by system customization, and is used for point cloud data clustering of different reflectors, for example, the density clustering algorithm includes, but is not limited to, Density-Based Spatial Clustering of Applications (DBSCAN), etc.

At S404, for each pair of reflectors in a plurality of pairs of reflectors composed of any one of first reflectors and any one of second reflectors, cargo pose detection is performed based on respective light reflecting point cloud data of a first reflector and a second reflector in the pair of reflectors to obtain a first relative pose of a cargo relative to the material handling equipment corresponding to the pair of reflectors.

Here, the at least two reflectors are grouped into at least one pair according to a position relationship to group any two reflectors respectively located on the two opposite sides of the carrier into a same group, thereby performing calculation separately on respective point cloud data of the at least two reflectors, saving calculation steps, and further determining a first relative pose of the cargo relative to the material handling equipment from a position relationship between respective point cloud data of each pair of reflectors.

At S405, a relative pose of the cargo relative to the material handling equipment is determined based on the first relative pose corresponding to each pair of reflectors in the plurality of pairs of reflectors.

In an embodiment, according to the present application, after respective point cloud data of each pair of reflectors is acquired, corresponding cargo pose detection can be performed according to respective point cloud data of each pair of reflectors, so as to obtain one first relative pose, and after a first relative pose corresponding to each pair of reflectors in at least one pair of reflectors is integrated, the relative pose of the cargo relative to the material handling equipment is obtained. Specific embodiments of the cargo pose detection are described in detail above, and will not be repeated herein.

Further, according to the present application, the relative pose of the cargo relative to the material handling equipment can be determined based on the at least one first relative pose. For example, in the present application, the at least one first relative pose may be calculated by using a preset pose calculation formula, so as to obtain the relative pose of the cargo relative to the material handling equipment. The pose calculation formula is preset by system customization, for example, calculating such as averaging and taking a mode may be performed on the at least one first relative pose, so as to obtain the relative pose of the cargo relative to the material handling equipment.

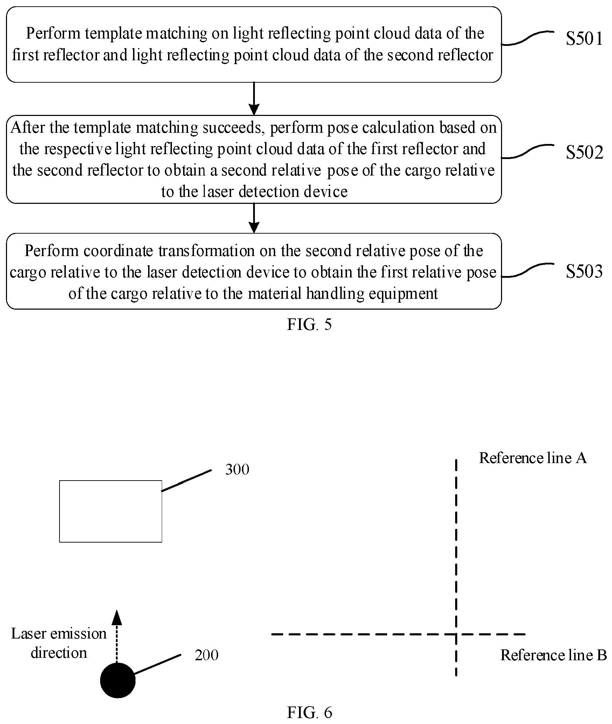

By taking any one of at least one pair of reflectors as an example, embodiments in which the relative pose of the cargo relative to the material handling equipment is acquired from calculation based on respective light reflecting point cloud data of one pair of reflectors will be introduced below reflector. The any one pair of reflectors includes any one of at least one first reflector disposed on a first side of the carrier and any one of at least one second reflector disposed on a second side of the carrier opposite to the first side. FIG. 5 is a schematic flowchart showing another cargo pose detection method according to embodiments of the present application. The method as shown in FIG. 5 includes steps S501 to S503.

At S501, template matching is performed on light reflecting point cloud data of the first reflector and light reflecting point cloud data of the second reflector.

Specific embodiments of the template matching are not limited in the present application. For example, in the present application, consistency matching may be performed on the respective light reflecting point cloud data of the first reflector and the second reflector by using a preset reflector template (for example, template point cloud data of the reflector template). The reflector template herein is pre-configured by system customization according to actual requirements, and the consistency matching herein may refer to respectively calculating a first similarity between the template point cloud data and the light reflecting point cloud data of the first reflector and a second similarity between the template point cloud data and the light reflecting point cloud data of the second reflector. If both the first similarity and the second similarity are greater than a preset threshold, it is indicated that the consistency matching succeeds, and step S502 continues to be performed; if at least one of the first similarity or the second similarity is less than or equal to the preset threshold, it is indicated that the consistency matching fails, and the process may be ended.

At S502, after the template matching succeeds, pose calculation is performed based on the respective light reflecting point cloud data of the first reflector and the second reflector to obtain a second relative pose of the cargo relative to the laser detection device.

According to the present application, after the matching on the respective light reflecting point cloud data of the first reflector and the second reflector succeeds, the second relative pose of the cargo relative to the laser detection device 200 may be calculated based on the respective light reflecting point cloud data of the first reflector and the second reflector. Specific embodiments of the pose calculation are not limited in the present application. For example, in an embodiment, according to the present application, gravity center calculation is performed based on the respective light reflecting point cloud data of the first reflector and the second reflector to obtain a first gravity center of the light reflecting point cloud data corresponding to the first reflector and a second gravity center of the light reflecting point cloud data corresponding to the second reflector; center point calculation and slope calculation are performed based on the first gravity center and the second gravity center to obtain the second relative pose of the cargo relative to the laser detection device. The gravity center may refer to gravity center coordinates of light reflecting point cloud data.

The second relative pose herein includes a placement position of the cargo relative to the laser detection device and a placement direction of the cargo relative to the laser detection device. The placement position of the cargo relative to the laser detection device is a center point of a connecting line between the first gravity center and the second gravity center, and the placement direction of the cargo relative to the laser detection device is determined according to a target slope of a target straight line composed of the first gravity center and the second gravity center relative to a preset reference line. The first reflector is, for example, the first reflector301 shown in FIG. 1, and the second reflector is, for example, the second reflector302 shown in FIG. 1.

In some embodiments, a process of determining the placement direction may include: acquiring a preset standard slope; calculating a slope difference value between the target slope and the standard slope; determining a target angle corresponding to the slope difference value as the placement direction, where the preset standard slope is a slope of a straight line composed of a center point of the first reflector and a center point of the second reflector relative to the reference line when the carrier is in a preset standard placement position.

The preset standard slope is obtained by those skilled in the art through measurement and calculation after assembling the first reflector and the second reflector on the carrier, and is related to the relative position between the first reflector and the second reflector. Relative positions between different first reflector and different second reflector have different standard slopes. The relative position between the first reflector and the second reflector may be disposed exactly opposite to each other, for example, in FIG. 1, the position relationship between the first reflector301 and the second reflector302 may be disposed exactly opposite to each other, or may be disposed non-exactly opposite to each other, that is, a connecting line between a center point of the first reflector301 and a center point of the second reflector302 has a slope that is not zero, which is not limited in the present application. In some embodiments, when the first reflector and the second reflector are disposed exactly opposite to each other, the standard slope is 0, and in this case, when the placement direction of the cargo relative to the laser detection device is calculated, the placement direction can be determined directly from the target slope of the target straight line composed of the first gravity center and the second gravity center relative to the preset reference line, thereby simplifying the calculation process.

The standard placement direction herein refers to a placement direction of the carrier when an extension line of a side of the carrier is parallel to a laser emission direction of the laser detection device. As shown in FIG. 6, in this case, if the material handling equipment is placed at the position of the laser detection device, the material handling equipment can move to the carrier without changing a moving direction, so as to realize the carrying of the cargo on the carrier. However, if the carrier is not in the standard placement direction, that is, there is a certain angle between the carrier and the standard placement direction, the slope corresponding to the straight line composed of the center point of the first reflector and the center point of the second reflector is inconsistent with the standard slope in the standard placement direction, thereby determining that the carrier deviates from the standard placement direction.

The disposing direction of the reference line herein may be specifically designed according to requirements, such that the slope corresponding to the target straight line can be calculated, which is not limited in the present application. For example, the reference line may be a connecting line between a center point of the laser detection device and a center point of the carrier when the carrier is in a preset standard placement direction, for example, a reference line A in FIG. 6, or be a straight line perpendicular to a connecting line between the center point of the laser detection device and the center point of the carrier, for example, a reference line B in FIG. 6. It should be noted that, after it is determined that a certain straight line is the reference line, other straight line will not be selected as the reference line, that is, the reference line when the target slope and the standard slope are calculated is the same reference line.

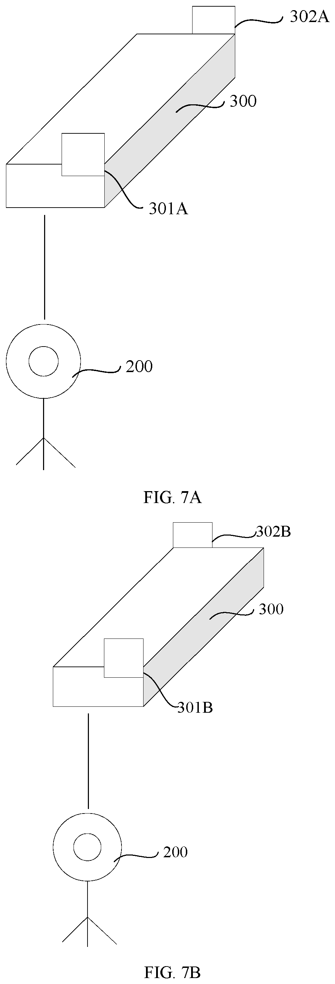

Illustratively, taking the reference line that is the reference line A in FIG. 6 as an example, when a first reflector301A and a second reflector302A are disposed exactly opposite to each other on the carrier, as shown in FIG. 7A, since point cloud data of the two reflectors has the same coordinate on one axis, based on the situation of the point cloud data on other two axes of a three dimensional coordinate system, a target slope of a target straight line composed of a first gravity center of light reflecting point cloud data corresponding to the first reflector301A and a second gravity center of light reflecting point cloud data corresponding to the second reflector302A relative to the reference line A can be calculated directly. In this case, when the carrier 300 is in the preset standard placement direction, a standard slope between the first reflector301A and the second reflector302A is 0, such that the placement direction of the cargo relative to the laser detection device can be obtained directly according to the target slope. When a first reflector301B and a second reflector302B are disposed non-exactly opposite to each other on the carrier, as shown in FIG. 7B, since point cloud data of the two reflectors has different coordinates on one axis, based on the situation of the point cloud data on three axes of the three dimensional coordinate system, a target slope of a target straight line composed of a first gravity center of light reflecting point cloud data corresponding to the first reflector301B and a second gravity center of light reflecting point cloud data corresponding to the second reflector302B relative to the reference line A may be calculated. In this case, when the carrier 300 is in the preset standard placement direction, a standard slope between the first reflector301B and the second reflector302B is not 0, which is assumed to be C, such that a target angle corresponding to a difference value between the target slope and C needs to be calculated, and the target angle is used as the placement direction of the cargo relative to the laser detection device.

At S503, coordinate transformation is performed on the second relative pose of the cargo relative to the laser detection device to obtain the first relative pose of the cargo relative to the material handling equipment.

According to the present application, after the second relative pose of the cargo relative to the laser detection device is acquired, the coordinate transformation needs to be performed on the second relative pose to obtain the first relative pose of the cargo relative to the material handling equipment. Specific embodiments of the coordinate transformation are not limited in the present application. In an example, according to the present application, rotation and translation processing is performed on the second relative pose of the cargo relative to the laser detection device by using a pre-calibrated extrinsic matrix to complete the coordinate transformation on the relative pose, so as to obtain the first relative pose of the cargo relative to the material handling equipment.

The extrinsic matrix herein is acquired by the system pre-calibrating the laser detection device 200 and the material handling equipment 100, and is configured to reflect transformation from a world coordinate system where the laser detection device is located to a target coordinate system where the material handling equipment is located (which may be referred to as an Automated Guided Vehicle (AGV) coordinate system). The extrinsic matrix may specifically include a rotation matrix and a translation matrix, where the rotation matrix is configured to reflect a rotation amount from the world coordinate system to the target coordinate system, and the translation matrix is configured to reflect a translation amount from the world coordinate system to the target coordinate system.

In specific implementation, according to the present application, corresponding rotation and translation processing may be performed on the relative pose of the cargo relative to the laser detection device according to the rotation matrix and the translation matrix in the extrinsic matrix to obtain the relative pose of the cargo relative to the material handling equipment, such that the material handling equipment can subsequently carry and stack the cargo based on the relative pose, which is not limited in the present application.

It should be noted that, for contents that are not introduced or not described in the embodiments of the present application, reference may be made to corresponding related introduction in the embodiments of FIG. 1 to FIG. 3, which will not be repeated herein.

In the above cargo pose detection solution, the laser point cloud data is acquired, then the point cloud separation is performed on the laser point cloud data to obtain the respective light reflecting point cloud data of the at least two reflectors, and finally, the cargo pose detection is performed based on the respective light reflecting point cloud data of the at least two reflectors to obtain the relative pose of the cargo relative to the material handling equipment. The cargo herein may refer to a regular cargo or an irregular cargo, which is not limited in the present application. According to the present application, by using the at least two reflectors, the separation and the cargo pose detection are performed on the laser point cloud data formed by irradiating the cargo, such that the relative pose of the cargo relative to the material handling equipment can be conveniently and accurately obtained. In this way, both regular cargo pose detection and irregular cargo pose detection can be implemented; at the same time, the laser emitted from the laser detection device is reflected by using the reflectors, so as to avoid excessive dependence on a lighting environment, which further implements the irregular cargo pose detection and reduces the dependence on the lighting environment.

It should be understood that, although the steps in the flowcharts of FIG. 3 to FIG. 5 are sequentially displayed as indicated by arrows, these steps are not necessarily sequentially executed in an order indicated by the arrows. Unless explicitly stated herein, the execution order of these steps is not strictly limited, and these steps may be executed in other order. In addition, at least a part of the steps in FIG. 3 to FIG. 5 may include a plurality of sub-steps or a plurality of stages, and these sub-steps or stages are not necessarily executed at a same moment, but may be executed at different moments. These sub-steps or stages are not necessarily sequentially executed in an order, but may be executed in turn or alternately with at least a part of other step or sub-steps or stages of other step.

Based on the above embodiments, the embodiments of the present application provide a cargo pose detection apparatus for determining a pose of a cargo stacked on a carrier relative to a material handling equipment. Modules included in the cargo pose detection apparatus and units included in the modules may be implemented through a processor, and of course, may be implemented through a specific logic circuit; and in an implementation process, the processor may be a Central Processing Unit (CPU), a Microprocessor Unit (MPU), a Digital Signal Processor (DSP), a Field Programmable Gate Array (FPGA), or the like.

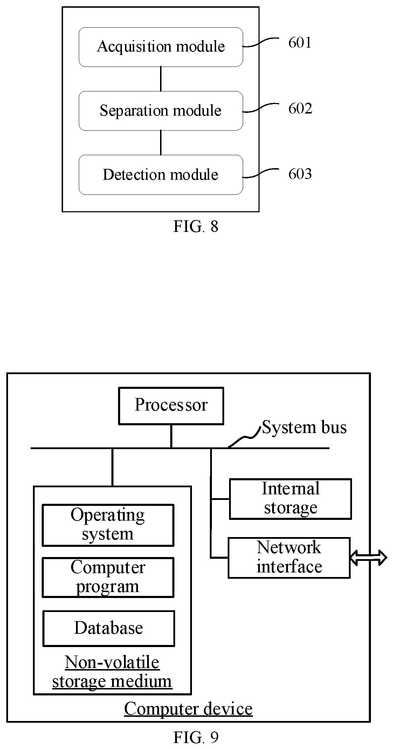

FIG. 8 is a structural schematic diagram showing a cargo pose detection apparatus according to embodiments of the present application. As shown in FIG. 8, the cargo pose detection apparatus includes: an acquisition module 601, a separation module 602, and a detection module 603.

The acquisition module 601 is configured to acquire laser point cloud data, where the laser point cloud data is acquired by using a laser detection device to scan the carrier stacked with the cargo, at least two reflectors are assembled on the carrier, the at least two reflectors are disposed on two opposite sides of the carrier, and both of the at least two reflectors are configured to reflect laser emitted on the cargo from the laser detection device.

The separation module 602 is configured to perform point cloud separation on the laser point cloud data to obtain respective light reflecting point cloud data of the at least two reflectors.

The detection module 603 is configured to perform cargo pose detection based on the respective light reflecting point cloud data of the at least two reflectors to obtain a relative pose of the cargo relative to the material handling equipment.

In some embodiments, the at least two reflectors have different reflectivities, and the separation module 602 is specifically configured to:
perform preprocessing on the laser point cloud data to obtain preprocessed point cloud data, where the preprocessing includes at least one of followings: point cloud filtering, exception removal, data cleaning, or data transformation;
perform the point cloud separation on the preprocessed point cloud data based on a light reflecting intensity difference between the at least two reflectors to obtain the respective light reflecting point cloud data of the at least two reflectors.

In some embodiments, the separation module 602 is specifically configured to:
perform point cloud clustering of different reflectors on the preprocessed point cloud data by using a preset density clustering algorithm to obtain the respective light reflecting point cloud data of the at least two reflectors.

In some embodiments, the at least two reflectors include at least one first reflector on a first side of the carrier and at least one second reflector on a second side of the carrier opposite to the first side, and the detection module 603 is specifically configured to:
for each pair of reflectors in a plurality of pairs of reflectors composed of any one of the at least one first reflector and any one of the at least one second reflector, perform the cargo pose detection based on respective light reflecting point cloud data of a first reflector and a second reflector in the pair of reflectors to obtain a first relative pose of a cargo relative to the material handling equipment corresponding to the pair of reflectors;
determine the relative pose of the cargo relative to the material handling equipment based on the first relative pose corresponding to each pair of reflectors in the plurality of pairs of reflectors.

In some embodiments, the detection module 603 is specifically configured to: perform calculation processing on first relative poses corresponding to the plurality of pairs of reflectors to determine a result of the calculation processing as the relative pose of the cargo relative to the material handling equipment, where the calculation processing includes: averaging or taking a mode.

In some embodiments, the detection module 603 is specifically configured to:
perform template matching on the respective light reflecting point cloud data of the first reflector and the second reflector;
after the template matching succeeds, perform pose calculation based on the respective light reflecting point cloud data of the first reflector and the second reflector to obtain a second relative pose of the cargo relative to the laser detection device;
perform coordinate transformation on the second relative pose of the cargo relative to the laser detection device to obtain the first relative pose of the cargo relative to the material handling equipment.

In some embodiments, the detection module 603 is specifically configured to:
perform consistency matching on the respective light reflecting point cloud data of the first reflector and the second reflector by using preset template point cloud data.

In some embodiments, the detection module 603 is specifically configured to:
perform gravity center calculation based on the respective light reflecting point cloud data of the first reflector and the second reflector to obtain a first gravity center of first light reflecting point cloud data corresponding to the first reflector and a second gravity center of second light reflecting point cloud data corresponding to the second reflector;
perform center point calculation and slope calculation based on the first gravity center and the second gravity center to obtain the second relative pose of the cargo relative to the laser detection device, where the second relative pose of the cargo relative to the laser detection device includes a placement position of the cargo relative to the laser detection device and a placement direction of the cargo relative to the laser detection device,
where a center point of a connecting line between the first gravity center and the second gravity center is used as the placement position of the cargo relative to the laser detection device, and the placement direction of the cargo relative to the laser detection device is determined according to a target slope of a target straight line composed of the first gravity center and the second gravity center relative to a preset reference line.

In some embodiments, the detection module 603 is specifically configured to:
acquire a preset standard slope, where the preset standard slope is a slope of a straight line composed of a center point of the first reflector and a center point of the second reflector relative to the reference line when the carrier is in a preset standard placement direction; calculate a slope difference value between the target slope and the standard slope; determine a target angle corresponding to the slope difference value as the placement direction.

In some embodiments, the detection module 603 is specifically configured to:
rotate and translate the second relative pose of the cargo relative to the laser detection device based on a pre-calibrated extrinsic matrix to realize the coordinate transformation on the second relative pose, so as to obtain the first relative pose of the cargo relative to the material handling equipment,
where the extrinsic matrix is configured to reflect transformation from a world coordinate system where the laser detection device is located to a target coordinate system where the material handling equipment is located.

In some embodiments, the detection module 603 is specifically configured to: calculate a first similarity between template point cloud data and the light reflecting point cloud data of the first reflector and a second similarity between the template point cloud data and the light reflecting point cloud data of the second reflector; if both the first similarity and the second similarity are greater than a preset threshold, indicate that the template matching succeeds; if at least one of the first similarity or the second similarity is less than or equal to the preset threshold, indicate that the template matching does not succeed.

The description of the apparatus embodiments is similar to the description of the method embodiments, and has similar beneficial effects to the method embodiments. For technical details not disclosed in the apparatus embodiments of the present application, reference may be made to the description of the method embodiments of the present application for convenience of understanding.

It should be noted that, in the embodiments of the present application, the division of modules in the cargo pose detection apparatus shown in FIG. 8 is schematic, and is merely a division of logical functions, and in actual implementation, there may be other division manners. In addition, functional units in the embodiments of the present application may be integrated into one processing unit, or each unit may be present alone physically, or two or more units may be integrated into one unit. The integrated units may be implemented in a form of hardware, or in a form of software functional units, or in a form of a combination of software and hardware.

It should be noted that, in the embodiments of the present application, the above method, if being implemented in a form of software functional modules and being sold or used as an independent product, may be stored in a computer readable storage medium. Based on this understanding, the technical solutions in the embodiments of the present application in essence or a part thereof that contributes to the related art may be embodied in a form of a software product. The computer software product is stored in a storage medium, including several instructions for enabling an electronic device to perform all or a part of the methods described in the embodiments of the present application. The storage medium includes a U disk, a mobile hard disk, a Read Only Memory (ROM), a magnetic disk or an optical disc, and other media that can store program codes. In this way, the embodiments of the present application are not limited to any specific combination of hardware and software.

The embodiments of the present application provide computer device, and its internal structural diagram may be shown in FIG. 9. The computer device may be material handling equipment, or be a personal computer, a notebook computer, a palmtop computer, a server, or other device having an information processing capability, or be a mobile device, where the mobile device includes, but is not limited to, a mobile phone, a wearable device, a vehicle-mounted computer, a tablet computer, a projector, or the like.

The computer device includes a processor, a memory, and a network interface which are connected through a system bus. The processor of the computer device is configured to provide computing and control capabilities. The memory of the computer device includes a non-volatile storage medium and internal storage. The non-volatile storage medium stores an operating system, a computer program, and a database. The internal storage provides an environment for running the operating system and the computer program in the non-volatile storage medium. The database of the computer device is configured to store data. The network interface of the computer device is configured to communicate with an external terminal through network connection. The computer program is executed by the processor to implement a cargo pose detection method.

The embodiments of the present application provide a computer readable storage medium, having a computer program stored thereon, where the computer program is executed by a processor to implement the steps in the method provided in the embodiments.

The embodiments of the present application provide a computer program product including instructions that, when running on a computer, cause the computer to implement the steps in the method provided in the method embodiments.

Those skilled in the art may understand that the structure shown in FIG. 9 is merely a block diagram of a partial structure related to the solutions of the present application, and does not constitute a limitation on computer device to which the solutions of the application is applied. Specific computer device may include more or fewer components than those shown in the figure, or combinations of some components, or different component arrangements.

In an embodiment, the cargo pose detection apparatus provided in the present application may be implemented in a form of a computer program, and the computer program may run on the computer device shown in FIG. 9. The memory of the computer device may store program modules constituting a cargo pose detection apparatus, for example, the acquisition module, the separation module, and the detection module shown in FIG. 8. The computer program formed of the program modules causes the processor to execute the steps in the cargo pose detection methods according to the embodiments of the present application described in the specification.

By implementing the embodiments of the present application, the computer device acquires the laser point cloud data, then performs the point cloud separation on the laser point cloud data to obtain the respective light reflecting point cloud data of the at least two reflectors, and finally, performs the cargo pose detection based on the respective light reflecting point cloud data of the at least two reflectors to obtain the relative pose of the cargo relative to the material handling equipment. The cargo herein may refer to a regular cargo or an irregular cargo, which is not limited in the present application. According to the present application, by using the at least two reflectors, the separation is performed on the laser point cloud data formed by irradiating the cargo, and the cargo pose detection is performed, such that the relative pose of the cargo relative to the material handling equipment can be conveniently and accurately obtained. In this way, both regular cargo pose detection and irregular cargo pose detection can be implemented; at the same time, the laser emitted from the laser detection device is reflected by using the reflectors, so as to avoid excessive dependence on a lighting environment, which further implements the irregular cargo pose detection and reduces the dependence on the lighting environment.

Here, it should be noted that: the description of the storage medium and the apparatus embodiments is similar to the description of the method embodiments, and has similar beneficial effects to the method embodiments. For technical details not disclosed in the storage medium and the apparatus embodiments of the present application, reference may be made to the description of the method embodiments of the present application for convenience of understanding.

It should be understood that "one embodiment" or "an embodiment" or "some embodiments" mentioned throughout the specification means that particular features, structures, or characteristics related to the embodiments are included in at least one embodiment of the present application. Thus, "in one embodiment" or "in an embodiment" or "in some embodiments" appearing in the whole specification does not necessarily refer to the same embodiment. Furthermore, these particular features, structures, or characteristics may be combined into one or more embodiments in any suitable manner. It should be understood that, in various embodiments of the present application, a sequence number of each process does not mean an execution order. The execution order of each process should be determined based on its function and internal logic, and should not constitute any limitation on an implementation process of the embodiments of the present application. The sequence number of the embodiments of the present application is merely for the purpose of description, and does not represent advantages and disadvantages of the embodiments. The description of the embodiments tends to emphasize differences between the embodiments, and their same or similar parts may be referred to each other, which will not be repeated herein for brevity.

The term "and/or" herein is merely an association relationship for describing associated objects, and indicates that there may be three relationships, for example, an object A and/or an object B, which may indicate three cases: the object A exists alone, the object A and the object B exist simultaneously, and the object B exists alone.

It should be noted that, herein, the term "including", "containing" or any other variation thereof is intended to encompass non-exclusive inclusion, such that a process, method, article or device including a series of elements includes not only those elements but also other elements not listed explicitly or those elements inherent to such a process, method, article or device. Without more limitations, an element defined by the statement "including a..." shall not be precluded to include additional same elements present in a process, method, article or device including the elements.

In several embodiments provided in the present application, it should be understood that the disclosed apparatus and method may be implemented in other ways. The embodiments described above are only schematic. For example, the division of modules is only a division of logical functions, and in actual implementation, there may be other division manners, for example, multiple modules or components may be combined, or integrated into another system, or some features may be ignored, or not be implemented. In addition, the coupling or direct coupling or communication connection between displayed or discussed components may be through some interfaces, and indirect coupling or communication connection between apparatuses or modules may be electrical, mechanical or in other forms.

The modules described as separate components may or may not be physically separated, and the components displayed as modules may or may not be physical modules, which may be located in one place or may be distributed to multiple network units. Some or all of the modules may be selected according to actual needs to achieve the objectives of the solutions in the embodiments.

In addition, all functional modules in the embodiments of the present application may be integrated into one processing unit, or each module may be separately used as one unit, or two or more modules may be integrated into one unit. The integrated modules may be implemented in a form of hardware, or in a form of hardware plus software functional units.

Those of ordinary skill in the art can understand that: all or a part of steps for implementing the method embodiments can be completed by a program to instruct relevant hardware. The program can be stored in a computer readable storage medium. During execution of the program, steps described in the method embodiments can be included. The storage medium includes: a mobile storage device, a Read Only Memory (ROM), a magnetic disk or an optical disk, and other medium that can store program codes.

Alternatively, in the present application, the integrated units, if being implemented in a form of software functional modules and being sold or used as an independent product, may be stored in a computer readable storage medium. Based on this understanding, the technical solutions in the embodiments of the present application in essence or a part thereof that contributes to the related art may be embodied in a form of a software product. The computer software product is stored in a storage medium, including several instructions for enabling an electronic device to perform all or a part of the methods described in the embodiments of the present application. The storage medium includes: a mobile storage device, an ROM, a magnetic disk or an optical disk, and other medium that can store program codes.

The methods disclosed in the several method embodiments provided in the present application may be arbitrarily combined without conflict to obtain new method embodiments.

The features disclosed in the several product embodiments provided in the present application may be arbitrarily combined without conflict to obtain new product embodiments.

The features disclosed in the several method or apparatus embodiments provided in the present application may be arbitrarily combined without conflict to obtain new method or apparatus embodiments.

The above are merely embodiments of the present application, but the protection scope of the present application is not limited thereto, and any person skilled in the art may easily conceive of changes or replacements within the technical scope disclosed in the present application, which should be covered within the protection scope of the present application. Therefore, the protection scope of the present application shall be based on the protection scope of the claims.

## Claims

1. A cargo pose detection method for determining a pose of a cargo stacked on a carrier relative to a material handling equipment, wherein the method comprises:
acquiring laser point cloud data, wherein the laser point cloud data is acquired by using a laser detection device to scan the carrier, at least two reflectors are assembled on the carrier, the at least two reflectors are disposed on two opposite sides of the carrier, and both of the at least two reflectors are configured to reflect laser emitted on the cargo from the laser detection device;
performing point cloud separation on the laser point cloud data to obtain respective light reflecting point cloud data of the at least two reflectors; and
performing cargo pose detection based on the respective light reflecting point cloud data of the at least two reflectors to obtain a relative pose of the cargo relative to the material handling equipment.

2. The method according to claim 1, wherein the at least two reflectors have different reflectivities, and performing the point cloud separation on the laser point cloud data to obtain the respective light reflecting point cloud data of the at least two reflectors comprises:
performing preprocessing on the laser point cloud data to obtain preprocessed point cloud data, wherein the preprocessing comprises at least one of: point cloud filtering, exception removal, data cleaning, or data transformation; and
performing the point cloud separation on the preprocessed point cloud data based on a light reflecting intensity difference between the at least two reflectors to obtain the respective light reflecting point cloud data of the at least two reflectors.

3. The method according to claim 2, wherein performing the point cloud separation on the preprocessed point cloud data based on the light reflecting intensity difference between the at least two reflectors to obtain the respective light reflecting point cloud data of the at least two reflectors comprises:
performing point cloud clustering of different reflectors on the preprocessed point cloud data by using a preset density clustering algorithm to obtain the respective light reflecting point cloud data of the at least two reflectors.

4. The method according to claim 1, wherein the at least two reflectors comprise at least one first reflector disposed on a first side of the carrier and at least one second reflector disposed on a second side of the carrier opposite to the first side, and performing the cargo pose detection based on the respective light reflecting point cloud data of the at least two reflectors to obtain the relative pose of the cargo relative to the material handling equipment comprises:
for each pair of reflectors in a plurality of pairs of reflectors composed of any one of the at least one first reflector and any one of the at least one second reflector, performing the cargo pose detection based on respective light reflecting point cloud data of a first reflector and a second reflector in the pair of reflectors to obtain a first relative pose of the cargo relative to the material handling equipment corresponding to the pair of reflectors; and
determining the relative pose of the cargo relative to the material handling equipment based on the first relative pose corresponding to each pair of reflectors in the plurality of pairs of reflectors.

5. The method according to claim 4, wherein determining the relative pose of the cargo relative to the material handling equipment based on the first relative pose corresponding to each pair of reflectors in the plurality of pairs of reflectors comprises:
performing calculation processing on first relative poses corresponding to the plurality of pairs of reflectors to determine a result of the calculation processing as the relative pose of the cargo relative to the material handling equipment, wherein the calculation processing comprises: averaging or taking a mode.

6. The method according to claim 4, wherein performing the cargo pose detection based on the respective light reflecting point cloud data of the first reflector and the second reflector in the pair of reflectors to obtain the first relative pose of the cargo relative to the material handling equipment corresponding to the pair of reflectors comprises:
performing template matching on the respective light reflecting point cloud data of the first reflector and the second reflector;
after the template matching succeeds, performing pose calculation based on the respective light reflecting point cloud data of the first reflector and the second reflector to obtain a second relative pose of the cargo relative to the laser detection device; and
performing coordinate transformation on the second relative pose of the cargo relative to the laser detection device to obtain the first relative pose of the cargo relative to the material handling equipment.

7. The method according to claim 6, wherein performing the pose calculation based on the respective light reflecting point cloud data of the first reflector and the second reflector to obtain the second relative pose of the cargo relative to the laser detection device comprises:
performing gravity center calculation based on the respective light reflecting point cloud data of the first reflector and the second reflector to obtain a first gravity center of first light reflecting point cloud data corresponding to the first reflector and a second gravity center of second light reflecting point cloud data corresponding to the second reflector; and
performing center point calculation and slope calculation based on the first gravity center and the second gravity center to obtain the second relative pose of the cargo relative to the laser detection device, wherein the second relative pose of the cargo relative to the laser detection device comprises a placement position of the cargo relative to the laser detection device and a placement direction of the cargo relative to the laser detection device,
wherein a center point of a connecting line between the first gravity center and the second gravity center is used as the placement position of the cargo relative to the laser detection device, and the placement direction of the cargo relative to the laser detection device is determined according to a target slope of a target straight line composed of the first gravity center and the second gravity center relative to a preset reference line.

8. The method according to claim 7, wherein performing the center point calculation and slope calculation based on the first gravity center and the second gravity center to obtain the second relative pose of the cargo relative to the laser detection device comprises:
acquiring a preset standard slope, wherein the preset standard slope is a slope of a straight line composed of a center point of the first reflector and a center point of the second reflector relative to the reference line when the carrier is in a preset standard placement direction;
calculating a slope difference value between the target slope and the standard slope; and
determining a target angle corresponding to the slope difference value as the placement direction.

9. The method according to claim 8, wherein that the placement direction of the cargo relative to the laser detection device is determined according to the target slope of the target straight line composed of the first gravity center and the second gravity center relative to the preset reference line comprises:
when the first reflector and the second reflector are disposed exactly opposite to each other on the carrier, the standard slope is zero, and the placement direction is determined according to the target slope; and
when the first reflector and the second reflector are disposed non-exactly opposite to each other on the carrier, the standard slope is not zero, and the placement direction is determined according to the target angle corresponding to the slope difference value between the target slope and the standard slope.

10. The method according to claim 6, wherein performing the coordinate transformation on the second relative pose of the cargo relative to the laser detection device to obtain the first relative pose of the cargo relative to the material handling equipment comprises:
rotating and translating the second relative pose of the cargo relative to the laser detection device based on a pre-calibrated extrinsic matrix to realize the coordinate transformation on the second relative pose, so as to obtain the first relative pose of the cargo relative to the material handling equipment,
wherein the extrinsic matrix is configured to reflect transformation from a world coordinate system where the laser detection device is located to a target coordinate system where the material handling equipment is located.

11. The method according to claim 6, wherein performing the template matching on the respective light reflecting point cloud data of the first reflector and the second reflector comprises:
calculating a first similarity between template point cloud data and the light reflecting point cloud data of the first reflector and a second similarity between the template point cloud data and the light reflecting point cloud data of the second reflector;
in response to determining that both the first similarity and the second similarity are greater than a preset threshold, indicating that the template matching succeeds; and
in response to determining that at least one of the first similarity or the second similarity is less than or equal to the preset threshold, indicating that the template matching does not succeed.

12. A cargo pose detection apparatus for determining a pose of a cargo stacked on a carrier relative to a material handling equipment, the apparatus comprising:
an acquisition module, configured to acquire laser point cloud data, wherein the laser point cloud data is acquired by using a laser detection device to scan the carrier, at least two reflectors are assembled on the carrier, the at least two reflectors are disposed on two opposite sides of the carrier, and both of the at least two reflectors are configured to reflect laser emitted on the cargo from the laser detection device;
a separation module, configured to perform point cloud separation on the laser point cloud data to obtain respective light reflecting point cloud data of the at least two reflectors; and
a detection module, configured to perform cargo pose detection based on the respective light reflecting point cloud data of the at least two reflectors to obtain a relative pose of the cargo relative to the material handling equipment.

13. A material handling equipment, comprising:
a memory; and
a processor coupled to the memory,
wherein the processor is configured to execute the method according to any one of claims 1-11 based on instructions stored in the memory.

14. A computer readable storage medium, having computer program instructions stored thereon, wherein the instructions are executed by one or more processors to implement steps in the method according to any one of claims 1-11.
